# EUROPÄISCHE PATENTSCHRIFT

(11) **EP 0 609 915 B1**
(45) Veröffentlichungstag und Bekanntmachung des Hinweises auf die Patenterteilung: **09.04.1997**
(21) Anmeldenummer: 94105528.7
(22) Anmeldetag: 28.12.1989
(51) Int. Cl.: A01B 63/112

(54) **Steuersystem für eine Anhängevorrichtung**
Control system for regulating a trailing device
Système de contrôle pour un outil du travail de sol

(30) Priorität: 06.01.1989 US 294522
(43) Veröffentlichungstag der Anmeldung: 10.08.1994
(62) Teilanmeldung aus: 89124056.6
(73) Patentinhaber: DEERE & COMPANY, Moline, Illinois 61265 (US)
(72) Erfinder: Boe, Thomas Eugene, Cedar Falls, Iowa 50613 (US); Bergene, Mark Allen, Cedar Falls, Iowa 50613 (US)
(74) Vertreter: Feldmann, Bernhard

(56) Entgegenhaltungen:
- EP-A- 0 153 102
- EP-A- 0 212 304
- EP-A- 0 292 859
- GB-A- 2 093 676
- US-A- 4 503 916
- US-A- 4 508 176
- US-A- 4 518 044

## Beschreibung

Die Erfindung betrifft ein Steuersystem für eine Anhängevorrichtung eines Fahrzeuges, durch das die Arbeitstiefe eines an der Anhängevorrichtung montierten Arbeitsgerätes in Abhängigkeit von verschiedenen erfaßten und durch eine Bedienungsperson eingestellten Parametern steuerbar ist, gemäß den Merkmalen des Oberbegriffs des Patentanspruchs 1.

Es wurden verschiedene Steuersysteme für Anhängevorrichtungen vorgeschlagen. In der US-PS-3,757,868 ist beispielsweise eine inzwischen konventionelle hydromechanische Steuervorrichtung beschrieben, die relativ einfache Steuerbetätigungen aufweist, an die sich die Bedienungspersonen im Laufe der Jahre bereits gewöhnt haben. Es handelt sich um einen Steuerhebel und ein Mischsteuerpotentiometer. Die Funktionen derartiger Steuersysteme sind jedoch in bestimmter Hinsicht begrenzt. Arbeitet solch ein Steuersystem beispielsweise bei einem Zugkraft-Ansprechmodus im stationären Gleichgewichtszustand, so führen Änderungen der Einstellung des Mischungsverhältnisses zwischen Last und Tiefe zu erheblichen Änderungen der Arbeitstiefe des Arbeitsgerätes. Wünscht die Bedienungsperson eine Arbeitsweise unter Beibehaltung der ursprünglichen Tiefe, so muß sie eine zusätzliche Einstellung am Steuerhebel vornehmen. Ferner muß solch ein System kräftig auf Änderungen des Zugkraftmeßwertes ansprechen, um das Arbeitsgerät gegen den von dem Boden, durch den das Arbeitsgerät geführt wird, herrührenden Widerstand anzuheben und abzusenken. Dies erfordert ein Steuersystem mit einem relativ hohen Verstärkungsfaktor. Wird jedoch das Arbeitsgerät über dem Boden angehoben oder abgesenkt, so kann der hohe Verstärkungsfaktor bzw. die hohe Empfindlichkeit zu schnellen und abrupten Bewegungen der Anhängevorrichtung führen, mit dem Ergebnis, daß unerwünschte Vibrationen und Spannungen bei dem Gestänge und den hydraulischen Komponenten auftreten. Ferner vermindert sich bei einem konventionellen hydromechanischen System der Gesamtverstärkungsfaktor, sofern die Einstellung des Mischungsverhältnisses in Richtung steigender Empfindlichkeit hinsichtlich Änderungen der gemessenen Zugkraft verstellt wird. Die Mischeinstellung läßt sich auch so weit verstellen, daß die Empfindlichkeit über einen Bereich hinaus verstellt wird, der während der Feldarbeit tatsächlich nützlich ist.

Die EP-A-0212304 beschreibt eine elektrohydraulische Einrichtung zur kombinierten Zugkraft-Schlupfregelung für einen Schlepper mit angelenktem Pflug, bei welchem dem Istwert der Zugkraft das schlupfabhängige Signal aufgeschaltet und danach einer Mischvorrichtung, an der ein Lageistwert anliegt, zugeführt wird. Bei Verwendung eines einzigen Sollwertgebers soll sich dadurch im Betriebszustand der Lageregelung der Schlupfeinfluß ausblenden lassen, während bei einer Mischregelung die durch die Schlupfauswertung bedingten Schwingungen der Regeleinrichtung sich durch Lagebeimischungen dämpfen lassen sollen. Die bereits angesprochenen Probleme werden durch die bekannte Einrichtung nicht behoben.

Es wurde eine Reihe von Versuchen durchgeführt, um die Leistungsfähigkeit der Steuersysteme für Anhängevorrichtungen durch die Verwendung von Elektronik und/oder Mikroprozessoren zu verbessern (US-PS-4,508,176, US-PS-4,518,044, US-PS-4,503,916). Mit Elektronik ausgerüstete Systeme wurden jedoch meistens nicht vollständig nutzbar gemacht, da hiermit eine steigende Komplexität der Bedienungseinrichtungen verbunden war. Es ist wünschenswert, ein Steuersystem für Anhängevorrichtungen zur Verfügung zu stellen, welches Bedienungseinrichtungen aufweist, die denen in konventionellen hydromechanischen Systemen ähneln, welche jedoch Leistungsvorteile aufweisen, die den Einsatz von Elektronik möglich machen.

Die mit der Erfindung zu lösende Aufgabe wird darin gesehen, ein Steuersystem für eine Anhängevorrichtung mit einfachen Bedienungselementen und einer verbesserten Leistungsfähigkeit anzugeben. Eine weitere Aufgabe der vorliegenden Erfindung wird darin gesehen, ein Steuersystem für eine Anhängevorrichtung bereitzustellen, bei dem Änderungen der Last/Tiefen-Mischeinstellung höchstens eine minimale Auswirkung auf die Arbeitstiefe während eines normalen Betriebs bei stationärer Zugsteuerung haben. Eine weitere Aufgabe der vorliegenden Erfindung wird darin gesehen, ein Steuersystem für eine Anhängevorrichtung anzugeben, durch das die Anhängevorrichtung dann, wenn das Arbeitsgerät aus dem Boden ausgehoben ist, sanft angesteuert wird und dann, wenn das Arbeitsgerät in den Boden eingreift, kräftig auf die Steuerung anspricht.

Die Aufgabe wird erfindungsgemäß durch den kennzeichnenden Teil des Anspruches 1 gelöst.

Weitere vorteilhafte Ausgestaltungen und Weiterbildungen der Erfindung gehen aus den übrigen Unteransprüchen hervor.

Gemäß einer bevorzugten Ausgestaltung der Erfindung enthält das Steuersystem für eine Anhängevorrichtung einen Zugkraftsensor, einen Anhängevorrichtungslagesensor, einen von einer Bedienungsperson betätigbaren Steuerhebel, einen Grenzwertsetzer für die obere Grenzlage der Anhängevorrichtung, einen Mischwertsetzer, einen Senkgeschwindigkeitssetzer und eine Steuereinheit, die in Abhängigkeit der Sensoren und Einstellmittel Steuersignale abgibt. Die Steuereinheit beinhaltet einen ersten (Last-) Steuerzustand, in dem die Anhängevorrichtung in Abhängigkeit einer linearen Funktion aus einer Mischung aus erfaßter Zugkraft und Lage gesteuert wird, und einen zweiten Steuerzustand, in dem die Anhängevorrichtung lediglich als nicht lineare Funktion der erfaßten Lage der Anhängevorrichtung gesteuert wird. In dem Laststeuerzustand wird ein Referenzlagewert als Sollwert verwendet, der nur den unteren Bereich der Lage der Anhängevorrichtung repräsentiert. Die sich auf das Zugkraft/Lage-Verhältnis beziehenden Werte der Empfindlichkeit und der Systemverstärkung werden von der Mischeinstellvorrichtung derart abgeleitet, daß mit steigender Empfindlichkeit auch die Systemverstärkung zunimmt. Der Empfindlichkeitswert ist begrenzt, so daß der relative Einfluß des erfaßten Zugkraftwertes gegen den erfaßten Lagewert lediglich um 0,5 bis 2,0 voneinander abweicht.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:
- Fig.1: eine vereinfachte schematische Darstellung eines landwirtschaftlichen Schleppers, der mit der vorliegenden Erfindung ausgerüstet ist,
- Fig. 2: ein elektrisches und hydraulisches Diagramm der vorliegenden Erfindung,
- Fig. 3a - 3j: Flußdiagramme des Algorithmus, der von dem in Fig. 2 dargestellten Mikroprozessor ausgeführt wird,

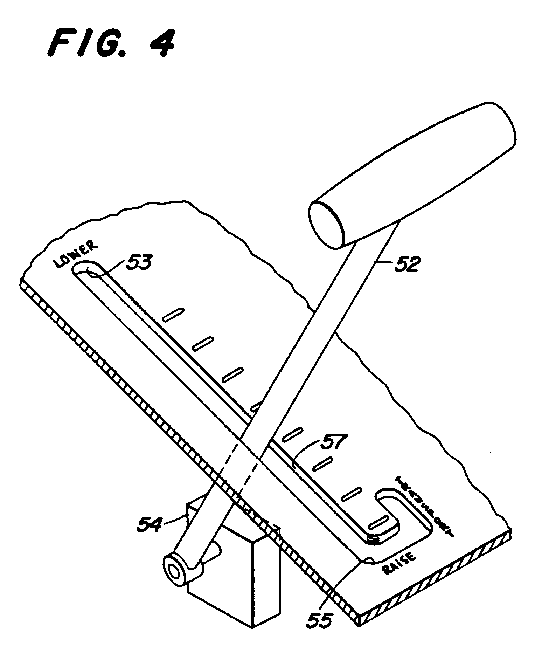

- Fig. 4: die Ansicht eines in Fig. 1 angedeuteten handbetätigbaren Hebels und
- Fig. 5a - 5c: Flußdiagramme eines Unterprogramms, welches von dem in Fig. 2 dargestellten Mikroprozessor ausgeührt wird.

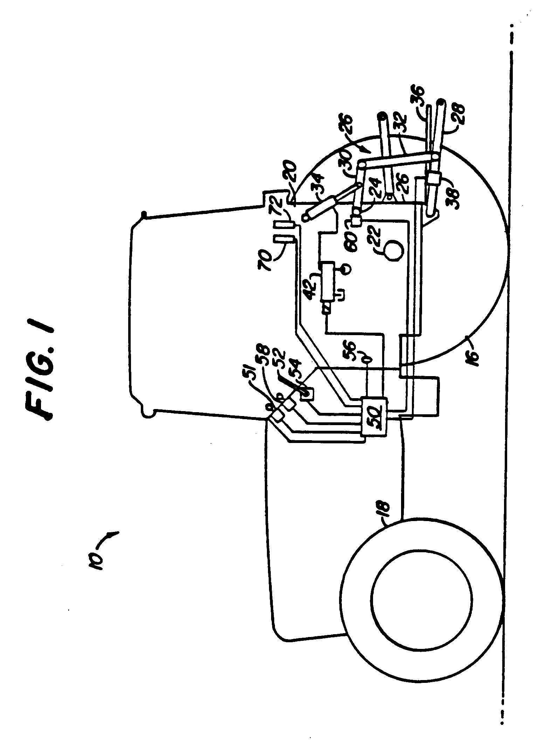

Der in Fig. 1 dargestellte Ackerschlepper 10 enthält ein rückwärtiges Gehäuse 20, welches eine Hinterradachse 22 und eine Hubwelle 24 abstützt. Eine Geräteanhängevorrichtung 26, beispielsweise eine konventionelle Dreipunktaufhängung, umfaßt Unterlenker 28, welche über Hubspindeln 32 mit Hubarmen 30 verbunden sind. Die Hubarme 30 ihrerseits sind mit der Hubwelle 24 so verbunden, daß sie eine gleichzeitige und gleichartige Bewegung sicherstellen und durch zwei parallel liegende hydraulische Hubwellenzylinder 34 angehoben und abgesenkt werden. Ein Zugpendel 36 erstreckt sich von dem Gehäuse 20 nach hinten. Der Schlepper 10 und die Geräteanhängevorrichtung 26 sind lediglich beispielhaft dargestellt. Für den Fachmann ist es ersichtlich, daß die Erfindung sich auch auf Schlepper und Anhängevorrichtungen anderer Ausbildung anwenden läßt. Beispielsweise kann die vorliegende Erfindung auch bei gelenkigen vierradgetriebenen Schleppern oder bei Breitspurschleppern mit Vorderradantrieb benutzt werden.

Ein einteiliges in den Boden eingreifendes Arbeitsgerät (nicht dargestellt), wie z. B. ein Streichblechpflug oder ein Meißelpflug, kann auf übliche Weise an den Unterlenkern 28 montiert werden. Alternativ dazu kann ein gezogenes Arbeitsgerät (nicht dargestellt) an dem Zugpendel 36 angekuppelt werden. Ein Zugkraftsensor 38 ist in ein nicht dargestelltes Verbindungsstück zwischengeschaltet, welches anstelle des Zugkraftfühlzylinders einer üblichen hydromechanischen Anhängevorrichtung eingefügt ist und der Erfassung der Zugkraft, welche von dem einteiligen Arbeitsgerät auf die Unterlenker 28 übertragen wird, dient. Alternativ hierzu können gesonderte linke und rechte Kraftsensoren in den linken und rechten Unterlenker 28 eingefügt sein, deren Signale elektronisch gemischt und gemittelt werden. Im Falle eines geschleppten Anhängegerätes kann die Zugkraft durch einen Kraftsensor, der in dem Zugpendel 36 zwischengeschaltet ist, oder mit einer Anhängevorrichtung, welche an die Hubspindeln gekoppelt ist, ermittelt werden. In beiden Fällen kann jeder geeignete bekannte Zugsensor Anwendung finden, z. B. das Modell GZ-10, welches durch Revere Corporation of America hergestellt wird.

Die hydraulische Verbindung zu und von den Zylindern 34 oder zu und von den nicht dargestellten entfernt liegenden Zylindern an einem gezogenen oder halbintegralen Arbeitsgerät wird durch ein Paar hydraulische Strömungssteuerventile 42a und 42b gesteuert, welche durch Magnetspulen betätigt werden und deren elektrische Steuersignale von einer Steuereinheit erzeugt werden. Bei dem Strömungssteuerventil 42 kann es sich um ein solches handeln, wie es in der EP 0 325 958 A1, auf die hiermit hinsichtlich der Offenbarung Bezug genommen wird, beschrieben wurde. Es kann jedoch auch ein anderes handelsübliches Ventil Verwendung finden.

Ein von der Bedienungsperson betätigbarer Steuerhebel 52 steht mit einem Wandler 54 (beispielsweise ein Potentiometer) in Verbindung, welcher eine Führungsgröße erzeugt. Diese Führungsgröße entspricht in Abhängigkeit der Einstellung eines Potentiometers 56 einer gewünschten Einstellage der Anhängevorrichtung, einer gewünschten Zugkraft oder einer Kombination von beiden. Ein oberes elektrisches Grenzsignal wird durch ein von der Bedienungsperson einstellbares Potentiometer 51 erzeugt. Der Steuerhebel 52 bewegt sich in einem Schlitz 57. Die Enden 53 und 55 dieses Schlitzes 57 wirken als unterer bzw. oberer mechanischer Anschlag, welche mechanisch die Lage des Steuerhebels 52 und somit auch das Signal des Potentiometers 54 begrenzen. Es ist ferner ein von der Bedienungsperson einstellbares Potentiometer 58 zur Einstellung des Absenkgeschwindigkeitsmaßes vorgesehen.

Ein Lagewandler 60, beispielsweise ein übliches Drehpotentiometer, erzeugt ein Lagemeßsignal, welches die aktuelle Lage der Hubwelle 24 repräsentiert. Es kann auch ein Lagerückkopplungssignal von dem Hubwellenzylinder 34 oder von dem entfernt liegenden Hubzylinder erhalten werden, sofern der Zylinder einen Lagewandler enthält, wie er beispielsweise in der US-PS-3,726,191 beschrieben ist.

Ferner kann ein zweipoliger Hebe/Senk-Umschalter 70 außerhalb der Schlepperkabine in der Nähe der Anhängevorrichtung befestigt sein, so daß die Bedienungsperson die Anhängevorrichtung von einem Ort außerhalb der Kabine aus anheben und absenken kann. Ein Eichschalter 72, der jedoch nicht Teil der Erfindung ist, befindet sich innerhalb der Kabine.

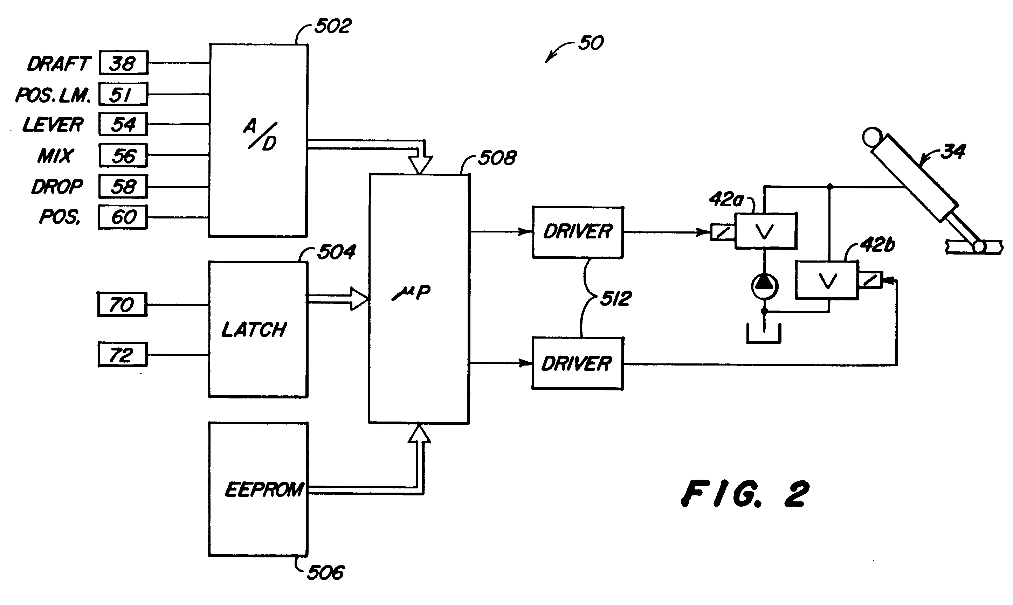

Bezugnehmend auf Fig. 2 enthält die Steuereinheit 50 einen Analog/Digital-Umsetzer 502, ein Latch 504 (Flip-Flop-Register zur vorübergehenden Aufnahme von Daten), einen elektrisch löschbaren programmierbaren Festwertspeicher (EEPROM) 506, einen Mikroprozessor 508 mit einem nicht dargestellten Integralzeitgeber und zwei Ventilsteuereinheiten 512. Bei den Ventilsteuereinheiten 512 kann es sich um beliebige übliche pulsweitenmodulierte Ventilstromsteuereinheiten handeln, es werden jedoch solche bevorzugt, wie sie in der nachveröffentlichten EP-A-0 377 214 beschrieben sind. Die Analogsignale der Sensoren bzw. Potentiometer 38, 51, 54, 56, 58 und 60 werden im Analog/Digital-Umsetzer in digitale Signale umgewandelt und dann dem Mikroprozessor 508 zugeführt. Das Latch 504 verbindet den Hebe/Absenk-Umschalter 70 und den Eichschalter 72 mit dem Mikroprozessor 508. Das EEPROM 506 speichert Eichdaten, welche in einem Eichverfahren verwendet werden, worauf in der nachveröffentlichten EP-A-0 377 215 näher eingegangen wird.

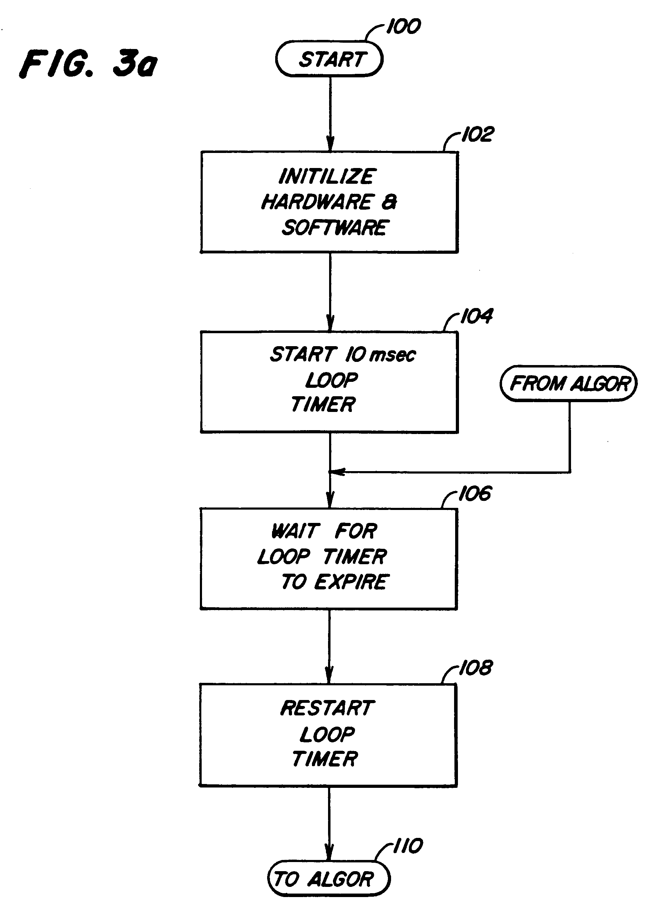

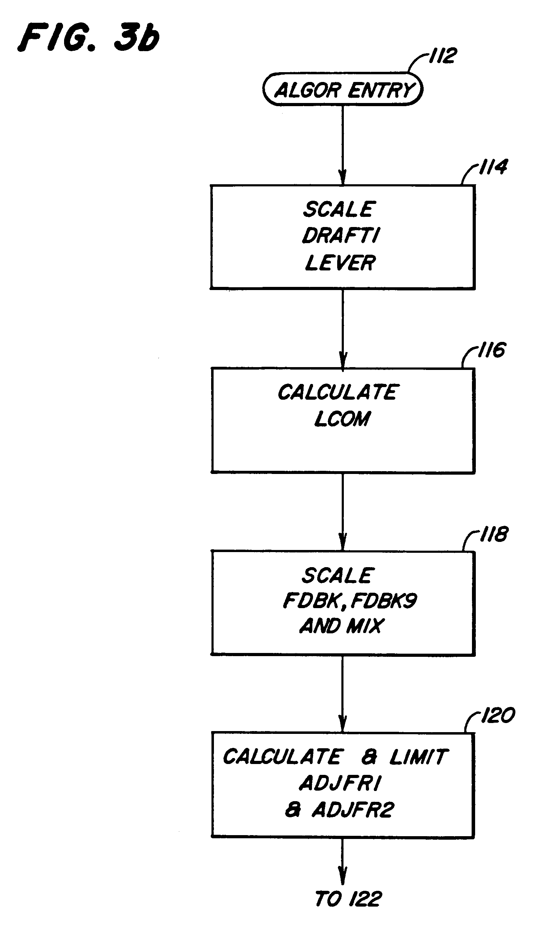

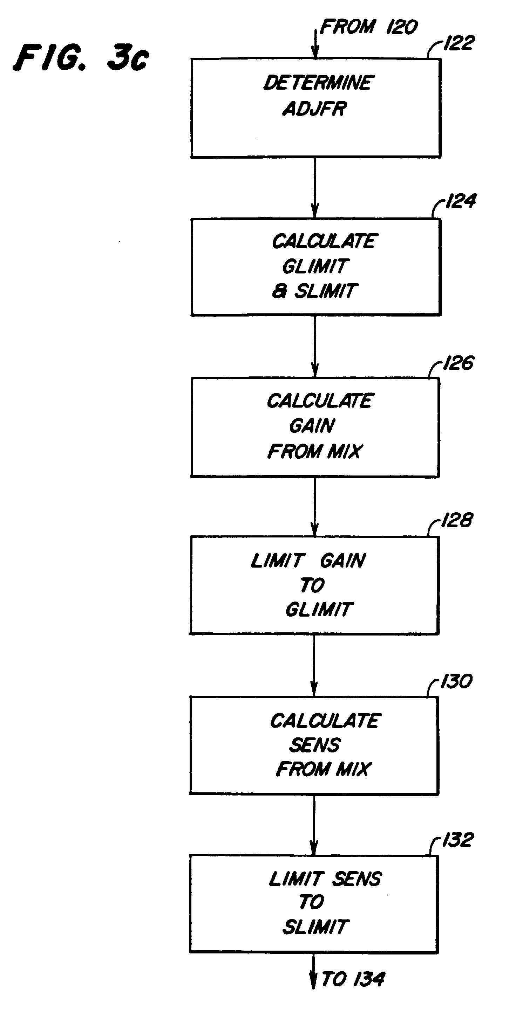

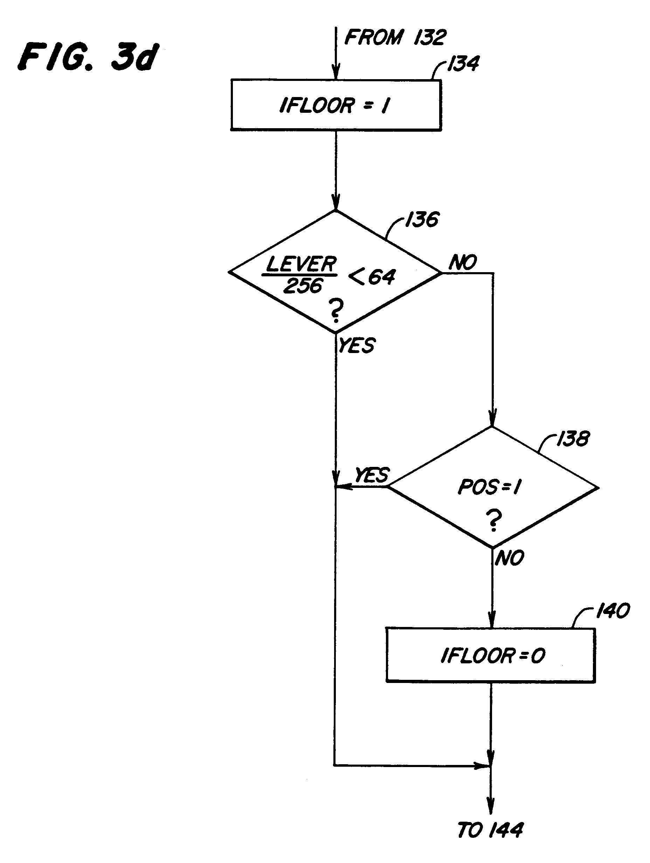

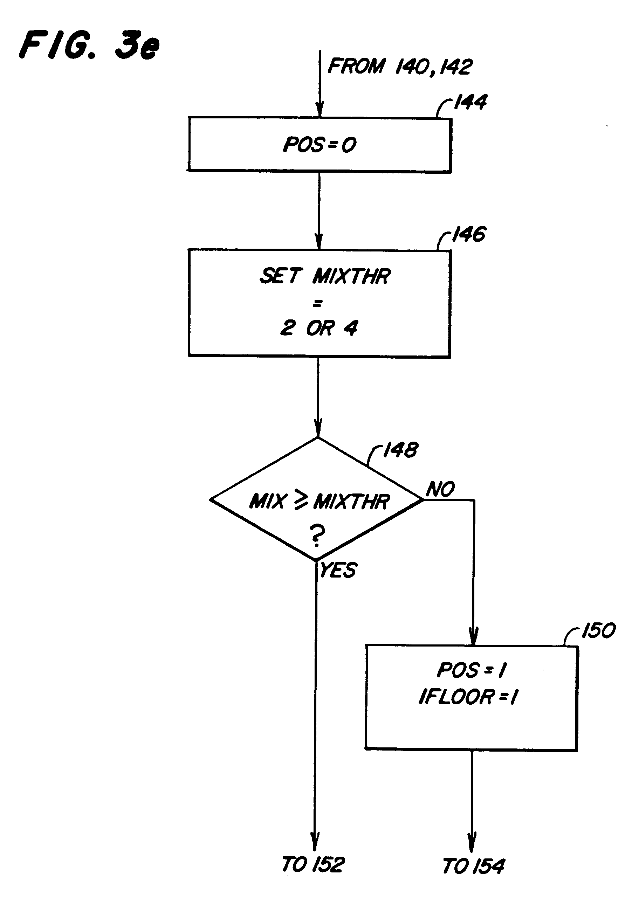

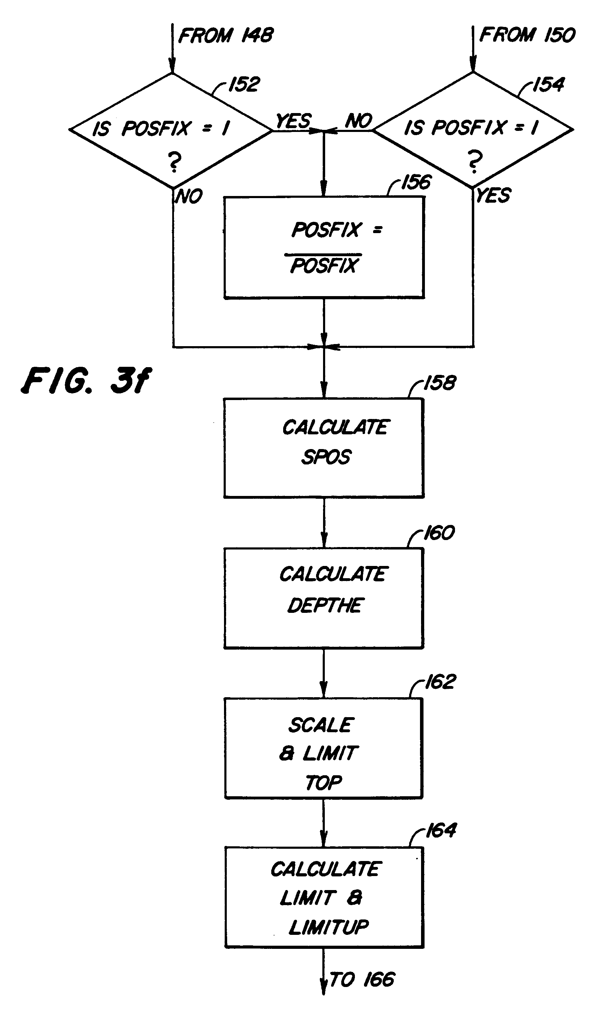

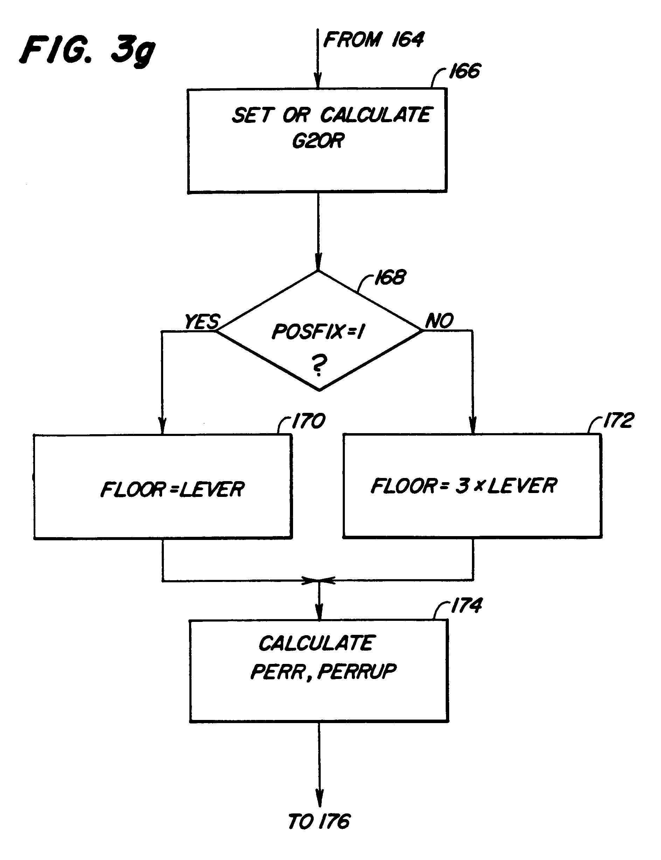

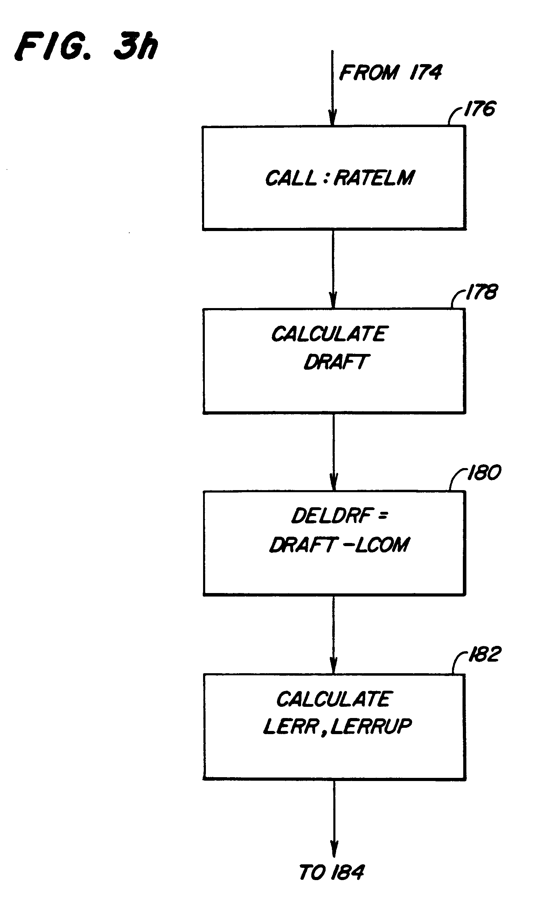

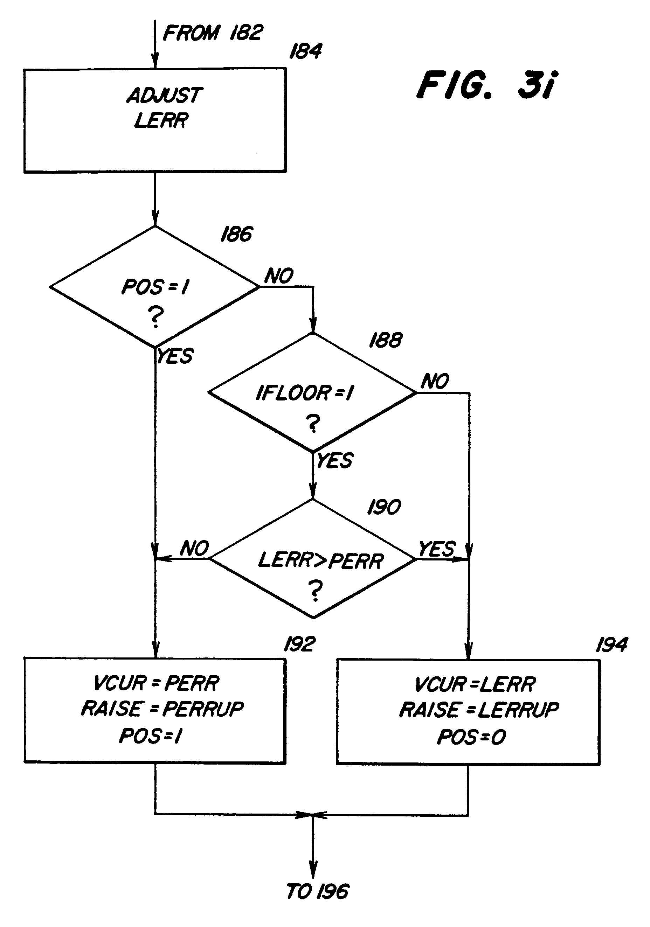

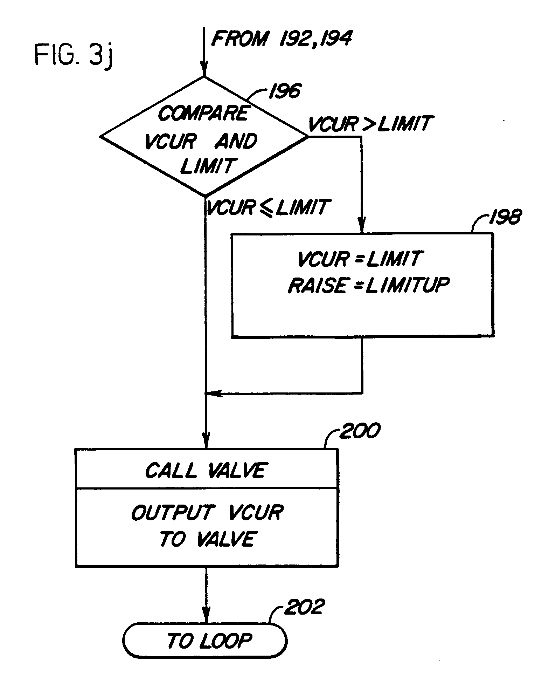

Der Steueralgorithmus, wie er von der Steuereinheit 50 ausgeführt wird, ergibt sich aus den in den Figuren 3a bis 3j dargestellten Flußdiagrammen. In der folgenden Beschreibung gelten folgende Zuordnungen: "G.T." bedeutet "größer als", "L.T." bedeutet "kleiner als", "G.T.E." bedeutet "größer als oder gleich" und "L.T.E." bedeutet "kleiner als oder gleich".

Der Algorithmus beginnt bei Schritt 100, wonach in dem Schritt 102 verschiedene Variablen und Festwerte eingeführt werden. Dann wird in den Schritten 104 bis 110 der ALGOR-Algorithmus alle 10 Millisekunden gestartet. Der ALGOR-Algorithmus beginnt mit dem Schritt 112, dann werden in Schritt 114 die Werte entsprechend der Zugkraft, welche vom Sensor 38 (DRAFT) gemessen wird, und entsprechend des Signals des Potentiometers 54, welches die Lage des Steuerhebels 52 (LEVER) repräsentiert, eingegeben und auf geeignete Weise skaliert. In Schritt 116 wird ein Lastbefehlswert LCOM nach der Gleichung berechnet: LCOM = (LEVER x 1693/65536) + 83. Dann werden in Schritt 118 folgende Werte skaliert: FDBK (16-bit-Wert, repräsentiert die Hubwellenlage entsprechend Potentiometer 60), FDBK9 (9-bit-Wert, repräsentiert die Hubwellenlage) und MIX (dieser Wert repräsentiert die Einstellung des Mischsteuerpotentiometers 56).

In Schritt 120 werden folgende Gleichungen und Anweisungen angewendet, um den Empfindlichkeitswert und den Verstärkungsgrenzwert (ADJFR1) und (ADJFR2) zu berechnen und zu begrenzen:
ADJFR1 = (FDBK/256 - G71F) x G70f,
wenn ADJFR1 L.T. 0, dann AJDFR1 = 0,
wenn ADJFR1 G.T. 255, dann ADJFR1 = 255,
ADJFR2 = (LEVER/256 - G71L) x G70L,
wenn ADJFR2 L.T. 0, dann ADJFR2 = 0,
wenn ADJFR2 G.T. 255, dann ADJFR = 255,
wobei G71F, G70f, G71L und G70L vorherbestimmbare Konstanten sind.

Dann wird in Schritt 122 ein Wert ADJFR dem größeren der Werte von ADJFR1 und ADJFR2 gleichgesetzt. Der ADJFR-Wert wird dann in Schritt 124 verwendet, um eine Verstärkungsgrenze (GLIMIT) und eine Empfindlichkeitsgrenze (SLIMIT) aus den folgenden Gleichungen zu ermitteln:
GLIMIT = (ADJFR x G72/256) + G60,
SLIMIT = ADJFR + 128, und
wenn SLIMIT G.T. 255, dann SLIMIT = 255,
wobei G60 und G72 vorherbestimmbare Konstanten sind.

In Schritt 126 wird ein Verstärkungswert GAIN als Funktion des Wertes MIX wie folgt bestimmt, wobei MIX dem von der Bedienungsperson eingestellten Wert am Mischsteuerpotentiometer 56 entspricht:
Wenn MIX L.T. G63, dann GAIN = G60,
wenn G63 L.T. MIX L.T. G64, dann GAIN = (MIX-G63) x G61 + G60,
oder
wenn MIX G.T. G64, dann GAIN = (G64-G63) x G61 + G60,
wobei G61, G63 und G64 vorherbestimmbare Konstanten sind.

In Schritt 130 wird der Empfindlichkeitswert SENS als Funktion von MIX wie folgt ermittelt:
Wenn MIX L.T. G63, dann SENS = 128 - (G63 - MIX) x G66/256,
wenn G63 L.T. MIX L.T. G64, dann SENS 128,
wenn MIX G.T. G64, dann SENS = (MIX-G64) x 1,5 + 128,
wenn SENS L.T. G62, dann SENS = G62, und
wenn SENS G.T. 255, dann SENS = 255,
wobei G62 und G66 vorherbestimmbare Konstanten sind. Das Ergebnis der Schritte 126 und 130 ist, daß mit einer Verstellung des Mischsteuerpotentiometers 56 von Minimum auf Maximum die Empfindlichkeit zunächst ansteigt, dann die Verstärkung ansteigt und dann wieder die Empfindlichkeit ansteigt.

Schritt 132 begrenzt den SENS-Wert auf den SLIM-Wert, der in Schritt 124 vorgegeben wurde. Dann wird in Schritt 134 ein Flag-Wert (IFLOOR) gleich 1 gesetzt, was der Ausgangsannahme entspricht, daß das Steuersystem eine Betriebsart einnimmt, in der es erwünscht ist, daß eine Minimum- oder Boden-Lage vorliegt, unter die die Anhängevorrichtung nicht abgesenkt wird.

Dann wird in Schritt 128 der GAIN-Wert auf den GLIMIT-Wert begrenzt, mit dem Ergebnis, daß die Schritte 120 bis 132 die Verstärkung und Empfindlichkeit derart begrenzen, daß zufällige Vibrationen der Anhängevorrichtung nicht selbsttätig das Steuersystem beeinflussen, wenn die Anhängevorrichtung sich in angehobener Stellung befindet und sich selbst oder ein aus dem Boden gehobenes Anhängegerät hält.

In Schritt 136 wird dann festgestellt, ob der Steuerhebel 52 sich in dem hinteren Viertel seines Bereiches befindet. Ein LEVER-Wert von Null bedeutet, daß der Steuerhebel 52 ganz hinten steht, und ein LEVER-Wert von 6535 bedeutet, daß der Steuerhebel 52 ganz vorne steht. Befindet sich der Steuerhebel 52 in seinem hinteren Viertel, dann erfolgt eine Fortsetzung mit Schritt 144. Anderenfalls wird der Algorithmus mit Schritt 138 fortgesetzt, in dem der Wert eines Lagemodus-Flags POS geprüft wird. Ist POS = 1, so befindet sich das System in seinem Lagesteuermodus, und Schritt 138 richtet den Algorithmus auf Schritt 144. Wird durch POS = 0 angezeigt, daß sich das System infolge einer früheren Rechenoperation des Schrittes 194 in dem Zugkraftsteuermodus befindet, so wird der Algorithmus mit Schritt 140 fortgesetzt, in dem der Flag-Wert IFLOOR Null gesetzt wird, wodurch angezeigt wird, daß das Merkmal, demzufolge eine Minimum- oder Bodenlage der Anhängevorrichtung erwünscht ist, nicht gefordert wird.

In Schritt 144 wird das POS-Flag Null gesetzt, wodurch die Annahme angezeigt wird, daß sich das System in seinem Zugkraftsteuermodus (Schritt 194) befindet, so lange, bis POS bei der Ausführung eines der Schritte 192 oder 150 auf Eins gesetzt wird.

In Schritt 146 wird ein MIXTHR-Wert auf 2 oder 4 gesetzt, und zwar in Abhängigkeit des POSFIX-Wertes, welcher willkürlich beim Systemanlauf auf 1 oder 0 initialisiert wird und welcher bei Schritt 156 invertiert wird. Wenn gemäß Schritt 148 MIX größer ist als MIXTHR, was bedeutet, daß das Steuersystem sich nicht in einer "festgesetzten Lage" befindet, schreitet der Algorithmus zu Schritt 152 weiter. Ist hingegen MIX nicht größer als MIXTHR, was bedeutet, daß das System sich in einem Steuermodus bei "festgesetzter Lage" befindet, schreitet der Algorithmus zu Schritt 150 weiter, wo das POS-Flag und das IFLOOR-Flag jeweils auf 1 gesetzt werden. Danach geht es weiter mit Schritt 154.

Sowohl in Schritt 152 als auch in Schritt 154 wird überprüft, ob das POSFIX-Flag richtig die Einstellung des Mischsteuerpotentiometers 56 wiedergibt. Schritt 152 richtet den Algorithmus auf Schritt 156, wenn das POSFIX-Flag gesetzt wurde, anderenfalls geht es mit Schritt 158 weiter. Schritt 156 invertiert den POSFIX-Wert. Auf diese Weise wirken die Schritte 146 bis 156 mit einer Hysteresis, wobei das Kontrollsystem ein zufälliges von dem Mischsteuerpotentiometer 52 herrührendes Rauschen geringer Intensität unterdrückt.

In Schritt 158 wird ein Lagesollwert SPOS wie folgt festgesetzt:
SPOS = (LEVER x 178/65536) + 243.

Damit hängt der SPOS-Wert von der Lage des Steuerhebels 52 ab und läßt Werte zu, welche nur der unteren Hälfte des Lagebereiches, den die Anhängevorrichtung einnehmen kann, entsprechen. Dies ist wünschenswert, da im Zugkraftsteuermodus gewöhnlich nur Steuerhebellagen in der unteren Hälfte des Lagebereiches verwendet werden. Die oberen Steuerhebellagen werden hingegen vor allem beim Transport- oder Lagesteuermodus eingestellt. Daher ist es wünschenswert, wenn im Zugkraftsteuermodus der Lageeinstellwert entsprechend begrenzt wird.

In Schritt 160 wird ein Tiefenfehlerwert DEPTHE durch folgende Gleichung bestimmt:
DEPTHE = FDBK9 - SPOS.

Dieser DEPTHE ist ein Tiefenfehlerwert des Anhängegerätes und wird später in Schritt 182 benutzt, um einen Lastfehlerwert LERR zu bestimmen.

Als nächstes wird in Schritt 162 ein Lagewert TOP für die obere Anhängevorrichtungsposition anhand der nachfolgenden Beziehungen durch Skalieren und Begrenzen des TOPLIM-Wertes gewonnen, wobei der TOPLIM-Wert von dem durch die Bedienungsperson einstellbaren Potentiometer 51 für den oberen Grenzwert erhalten wird.
TOP = 146 - 146 x TOPLIM/256, und
wenn TOP L.T. 15, dann TOP = 15.

In Schritt 164 wird ein Ventilbefehlsgrenzwert LIMIT aus folgenden Beziehungen bestimmt:
wenn FDBK G.T. TOP x 256, dann G20 = G20PS, sonst
wenn G20R = 0, dann G20 = G20PS x 2, sonst
G20 = G20R,
wobei G20PS ein gegenwärtiger Grenzwert für das Druckventil ist und G20R ein gegenwärtiger Grenzwert für das Rückflußventil ist.
Wenn ABS(FDBK - (TOP x 256)) G.T. 16384, dann LIMIT = G20, und
wenn ABS(FDBK - (TOP x 256)) L.T.E. 16384, dann LIMIT = G20 - G20 x (1 - (ABS(FDBK - (TOP x 256))/16384))²,
wobei ABS der absolute Funktionswert und G20 eine vorherbestimmbare Konstante ist.

Ferner wird in Schritt 164 ein Flag-Wert LIMTUP gesetzt, der angibt, ob der LIMIT-Wert an das Rückflußventil oder das Druckventil angelegt wird. LIMTUP wird nach folgender Beziehung bestimmt:
Wenn FDBK L.T. TOP, dann LIMTUP = 0, sonst LIMTUP = 1,
wobei LIMTUP = 0 anzeigt, daß der Befehlsgrenzwert ein minimales Rückflußventilkommando, und LIMTUP = 1 anzeigt, daß der Befehlsgrenzwert ein maximales Druckventilkommando ist.

Dieser Ventilbefehlsgrenzwert LIMIT repräsentiert die maximale Größe oder Stärke eines Befehles, durch welchen das Druckventil 42a angesteuert werden kann, oder die minimale Größe oder Stärke eines Befehles, durch welchen das Rückflußventil 42b angesteuert werden kann, um entweder zu öffnen oder zu schließen. Es soll betont werden, daß dann, wenn die Anhängevorrichtung dem von der Bedienungsperson anhand des Potentiometers 51 für den oberen Grenzwert vorgegebenen oberen Lagegrenzwert TOP nahe kommt, der LIMIT-Wert als nicht lineare Funktion des absoluten Wertes der Differenz zwischen FDBK (erfaßte Lage der Anhängevorrichtung) und TOP festgesetzt wird. Genauer gesagt hängt der LIMIT-Wert ab von dem Quadrat der Größe
(1 - (ABS(FDBK - (TOP x 256))/16384)).

Diese nicht lineare Beziehung ruft eine allmähliche weiche Bewegung der Anhängevorrichtung zu ihrer oberen Lage hervor, wenn die Bedienungsperson den Steuerhebel 52 zurückzieht, auch dann, wenn die Anhängevorrichtung und das Anhängegerät über den Boden angehoben sind.

In Schritt 166 wird ein Stromgrenzwert G20R für das Rückflußventil aus einem Senkgeschwindigkeitswert DRATE (welcher aus der Einstellung des von der Bedienungsperson einstellbaren Senkgeschwindigkeitspotentiometers 58 ableitbar ist) entsprechend der nachfolgenden Beziehung abgeleitet:
wenn DRATE G.T. 255, dann G20R 0 =, sonst
G20R = 2 x G20PS x (DRATE/256) + G20RM,
wobei G20PS und G20RM vorherbestimmbare Konstanten sind, die gewählt werden, um den maximalen Ventilstrom entsprechend den Anforderungen des speziellen elektrohydraulischen Ventils einzustellen.

Dies ermöglicht es der Bedienungsperson, den maximalen Grad, auf den das Rückflußventil 42b geöffnet werden kann, und damit auch den maximalen Grad, mit dem die Anhängevorrichtung 26 abgesenkt wird, einzustellen. Demgemäß ist der Rückflußventilgrenzwert G20R im wesentlichen (in einem Ausmaß, wie es eine 8-bit Steuerung erlaubt) stufenlos in einem bestimmten Bereich von der Bedienungsperson einstellbar.

Schritt 168 ermittelt, ob das POSFIX-Flag gleich 1 ist, wodurch angezeigt wird, daß ein Betriebszustand für eine "festgesetzte Lage" wirksam ist. Durch die Schritte 152 bis 156 wird der passende Wert von POSFIX bestimmt mit dem Ergebnis, daß POSFIX nur dann gleich 1 wird, wenn das Mischsteuerpotentiometer 56 auf sein Minimum (reine Lage) gesetzt ist. Ist POSFIX = 1, so schreitet der Algorithmus zu Schritt 170 weiter, wo ein Bezugswert FLOOR mit dem LEVER-Wert gleichgesetzt wird. Anderenfalls schreitet der Algorithmus mit Schritt 172 weiter, bei dem der Bezugswert FLOOR einem Vielfachen (dreifach) des LEVER-Wertes gleichgesetzt wird.

Als nächstes wird in Schritt 174 ein Ventilbefehl PERR für die Lagesteuerbetriebsart als eine nicht lineare Funktion der Größe (FDBK - FLOOR) wie folgt bestimmt:
wenn FDBK G.T.E. FLOOR, dann G20 = G20PS, sonst
wenn G20R = 0, dann G20 = G20PS x 2, sonst
G20 = G20R.
Wenn ABS(FDBK - FLOOR) G.T. 16384, dann
PERR = G20 - G20 x (1 - ABS(FDBK - FLOOR)/16384)², und
wenn FDBK L.T. FLOOR, dann
PERRUP = 0, R5 = FDBK - FLOOR, sonst
PERRUP = 1 und R5 = 0, wobei PERRUP ein Flag ist
(0 zeigt an, daß ein Signal an das Rückflußventil 42b angelegt wird, 1 zeigt an, daß ein Signal an das Druckventil 42a angelegt wird) und R5 ein Wert ist, der an anderer Stelle des Algorithmus verwendet wird.

Aus dieser nicht linearen Funktion für PERR folgt, daß die erste Ableitung von PERR hinsichtlich der Differenz oder Fehlergröße (FDBK - FLOOR) gleich Null ist, wenn (FDBK - FLOOR) gleich 16384 ist, wobei 16384 ein Grenzwert für (FDBK - FLOOR) ist, entsprechend einem gewünschten oder erlaubten PERR Wert. 16384 ist der Differenzwert, der zu einem maximalen Ventilsteuersignal oder PERR Wert korrespondiert. Es ergibt sich ein Steuersystem, bei dem der Verstärkungswert für die Ansteuerung der Anhängevorrichtung so modifiziert wird, daß Bewegungen der Anhängevorrichtung stufenlos, weich und ruckfrei erfolgen, da sich der Lagefehler nahe einem Wert ändert, der dem maximalen, durch den G20 Wert repräsentierten Ventilstrom entspricht.

Der Schritt 174 enthält eine nicht lineare Lagefehlerfunktion, welche ähnlich wie die Funktion in Schritt 164 so wirkt, daß die Anhängevorrichtung sich glatt und stufenlos entsprechend der Wandlerlage (repräsentiert durch FLOOR), die von der Bedienungsperson durch Verstellen des Steuerhebels 52 nach vorne eingestellt wird, bewegt, selbst dann, wenn die Anhängevorrichtung und das Anhängegerät von dem Boden abgehoben sind. Die Schritte 168 und 172 sind wirksam, wenn das System auf erfaßte Zugkraft (entsprechend der Einstellage des Mischsteuerpotentiometers) anspricht, um zu verhindern, daß der FLOOR-Wert die Zugkraft beeinflußt, die eine Absenkung der Anhängevorrichtung herbeiführt. Demgemäß arbeiten die Schritte 164 und 174 so, daß die Lage der Anhängevorrichtung durch eine nicht lineare Funktion begrenzt ist, wobei die Funktion von der gemessenen Lage (FDBK), die zwischen einem erwünschten oberen Grenzwert und einem erwünschten unteren Grenzwert liegt und der Lage der Anhängevorrichtung entspricht und durch die Bedienungsperson mittels des Steuerhebels 52 eingestellt ist.

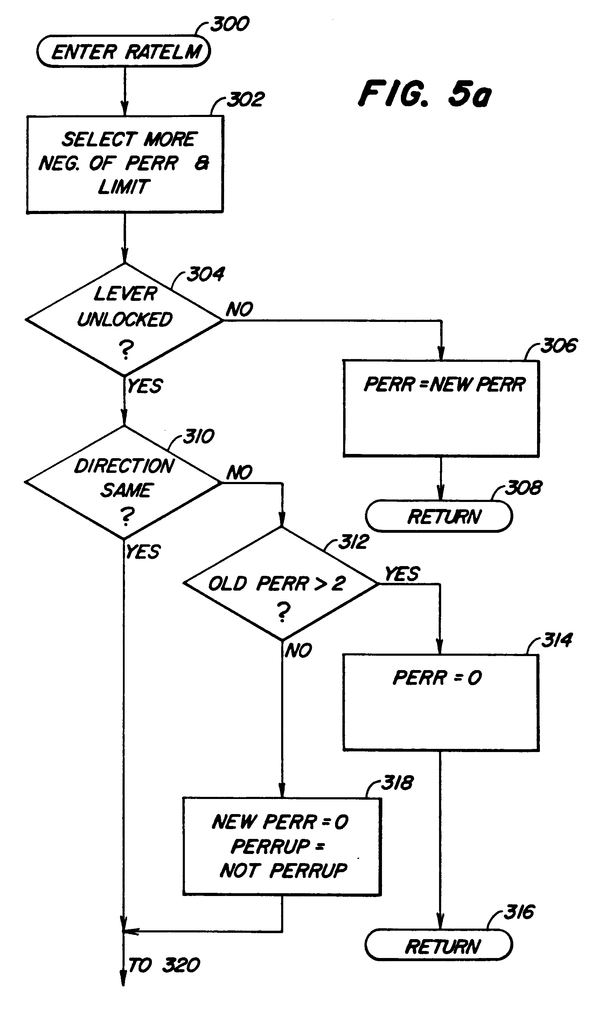

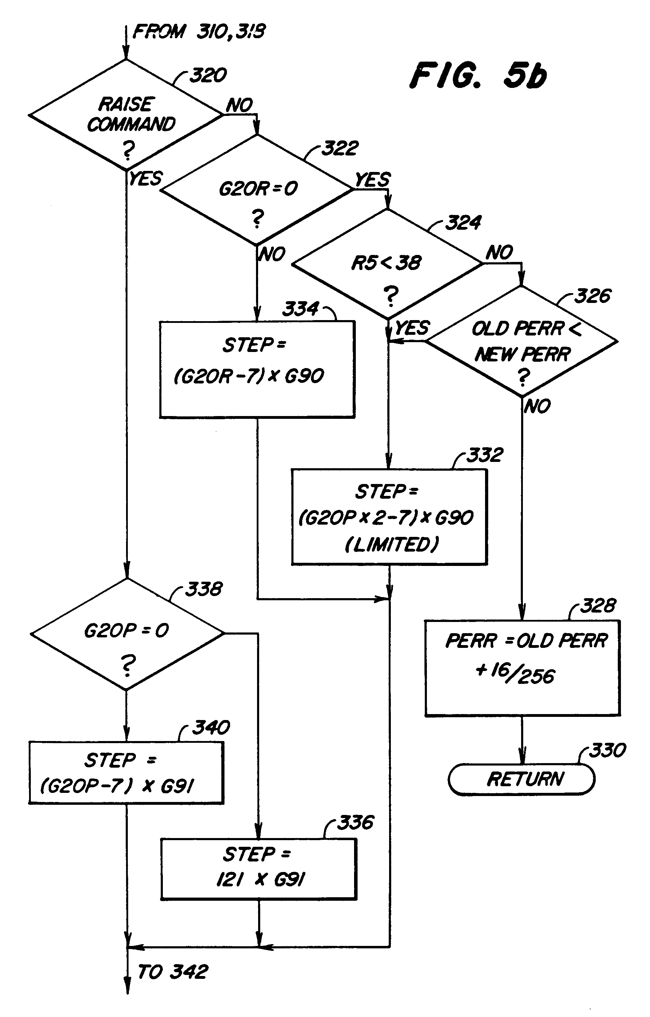

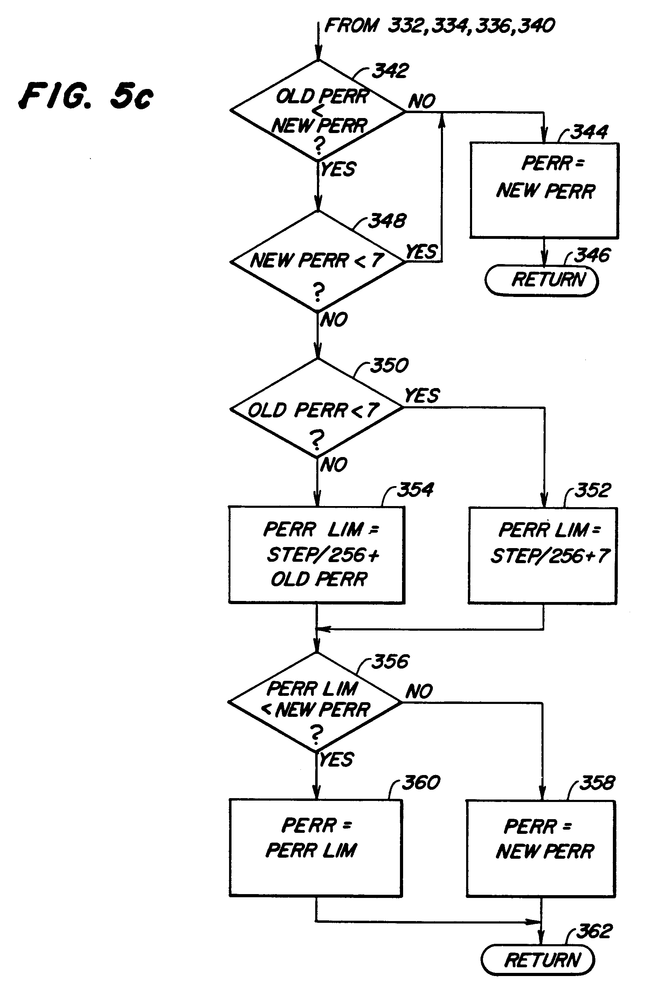

Schritt 176 ruft ein Unterprogramm RATELM auf, welches den R5-Wert, der in Schritt 174 bestimmt ist, verwertet und durch welches die Größe begrenzt wird, mit der die Ventile in Abhängigkeit von steigenden Lagefehlerwerten geöffnet werden. Wie die Figuren 5a bis 5c zeigen, wird das RATELM-Unterprogramm durch die Schritte 300 bis 362 ausgeführt. Es setzt den Lagefehlerwert PERR gleich mit dem Negativeren der Werte PERR oder LIMIT.

In Schritt 178 wird ein intern erfaßter Zugkraftwert DRAFT als Funktion des Signals des Zugkraftsensors 38 oder bei Verwendung mehrerer Sensoren als Funktion des Mittelwertes der Sensorsignale berechnet.

In Schritt 180 wird ein Zugkraftfehlerwert DELDRF gleichgesetzt der Differenz zwischen DRAFT und dem Lastbefehlswert LCOM.

Dann wird in Schritt 182 ein "vereinigter" oder Lastfehlerwert LDERR von dem Zugkraftfehlerwert (DELDRF), dem Empfindlichkeitswert (SENS), dem Tiefenfehlerwert (DEPTHE) und dem Verstärkungswert (GAIN) wie folgt abgeleitet:
LDERR = (DELDRF x SENS/256 + DEPTHE) x GAIN,
wenn LDERR L.T. 0, dann ist LERRUP = 0,
anderenfalls ist LERRUP = 1 und LERR = ABS(LDERR) (begrenzt auf 32767), wobei LERRUP ein Flag-Wert ist (0 bedeutet, daß ein Signal an das Rückflußventil 42b angelegt wird, und 1 bedeutet, daß ein Signal an das Druckventil 42a angelegt wird). Hat die Bedienungsperson somit durch Einstellung des Potentiometers 56 einen Mischwert eingestellt, wodurch das System auf Änderungen der erfaßten Zugkraft anspricht, so wird durch die Schritte 178 bis 182 ein Zugkraft- oder Lastfehlerwert LERR aus einer Mischfunktion abgeleitet, die primär aus einer linearen Funktion der erfaßten Zugkraft und sekundär aus einer linearen Funktion des begrenzten Lagefehlerwertes DEPTHE gebildet wird. Diese lineare Funktion erlaubt es dem Steuersystem, sehr schnell auf Änderungen der Zugkraft anzusprechen, wohingegen die nicht lineare Funktion der Schritte 164 bis 174 eine stoßfreie Steuerung der Anhängevorrichtung erlaubt, wenn die Anhängevorrichtung als Funktion ihrer erfaßten Lage gesteuert wird.

Da der SPOS-Wert nur äquivalent zur Lage der Anhängevorrichtung 26 in deren unteren Bereichshälfte sein kann, zielt der DEPTHE-Wert in Schritt 182 darauf ab, das Steuersystem zu veranlassen, die Anhängevorrichtung in dem unteren Bereich ihrer Lage und somit das Anhängegerät im Boden zu halten. Dies hat auch die Wirkung, daß dann, wenn das System in seinem Zugkraftsteuermodus in einem stationären Gleichgewichtszustand arbeitet, Änderungen in der Einstellung des Mischsteuerpotentiometers 56 nur minimale Änderungen in der Arbeitstiefe des Anhängegerätes zur Folge haben. Es soll auch hervorgehoben werden, daß der Empfindlichkeitswert SENS den relativen Einfluß zwischen dem Zugkraftfehler und dem Tiefenfehler auf die Ableitung des Lastfehlers LERR festsetzt. Als Ergebnis aus Schritt 130 ist die Größe dieses relativen Einflusses auf den Bereich von ungefähr 0,5 bis 2,0 begrenzt.

In Schritt 184 wird LERR, falls er nicht Null ist, auf unterschiedliche Werte wie folgt eingestellt, und zwar abhängig davon, ob das für die Ventilverstellung erforderliche Steuersignal an das Rückflußventil 42b oder an das Druckventil 42a angelegt ist:
wenn LERRUP = 1, dann LERR = 16 x LERR x G18LP/65536 + G19ADD und
wenn LERRUP = 0, dann LERR = 16 x LERR x G18R/65536 + G19ADD,
wobei G18LP, G18LR und G19ADD vorherbestimmbare Konstanten sind. Auf diese Art wird ein unterschiedlich großer LERR-Wert für das Rückflußventil 42b und das Druckventil 42a verwendet. Dies ermöglicht eine Auslegung des Algorithmus auf unterschiedliche Durchflußcharakteristiken für das Druckventil und das Rückflußventil.

In Schritt 186 wird dann anhand des POS-Flag geprüft, ob eine reine Lageregelung vorliegt. Wenn ja, schreitet der Algorithmus weiter zu Schritt 192, wo das Ventilkommando oder der Ventilstrom VCUR gleichgesetzt wird mit dem Lagefehlerwert PERR. Ferner wird in Schritt 192 ein RAISE-Flag gleichgesetzt mit PERRUP und das POS-Flag gleich 1 gesetzt. Liegt keine reine Lageregelung vor, so schreitet der Algorithmus zu Schritt 188 weiter.

In Schritt 188 wird bestimmt, ob das IFLOOR-Flag auf 1 gesetzt wurde, wodurch angezeigt wird, daß ein Bezugswert für die Bodenlage erforderlich ist. Ist das IFLOOR-Flag nicht 1, schreitet der Algorithmus weiter zu Schritt 194, in welchem der VCUR-Wert gleichgesetzt wird mit dem gemischten oder Lastfehlerwert PERR und in welchem das RAISE-Flag gleichgesetzt wird mit LERRUP und das POS-Flag auf Null gesetzt wird. Ist das IFLOOR-Flag nicht 1, so schreitet der Algorithmus weiter mit Schritt 190.

Der Schritt 190 richtet den Algorithmus auf Schritt 194, sofern LERR größer ist als PERR, anderenfalls auf Schritt 192. Von den Schritten 192 und 194 schreitet der Algorithmus weiter zu den Schritten 196 und 198, durch welche der VCUR-Wert auf den Grenzwert LIMIT begrenzt wird, und dann zu Schritt 200, welcher den VCUR-Wert an die zugehörige Ventilsteuereinheit 512 ausgibt, um den Zylinder 34 aus- oder einzufahren. Schließlich bewirkt Schritt 202 eine Rückführung zu der Zeitschleife, die in Fig. 3a dargestellt ist.

## Patentansprüche

1. Steuersystem für eine Anhängevorrichtung (26) eines Fahrzeuges (10), an das ein Bodenbearbeitungsgerät befestigbar ist, mit Betätigungsmitteln (34) zum Anheben und Absenken der Anhängevorrichtung (26) über einen Lagebereich in Abhängigkeit von an einen Eingang angelegten Steuersignalen, welches enthält:
- einen Sensor (60) zur Erzeugung eines Rückkopplungssignales FDBK, welches einer erfaßten Lage der Anhängevorrichtung (26) entspricht, und
- Mittel zur Erzeugung eines Bezugssignals R, welches einer Bezugslage der Anhängevorrichtung (26) entspricht, gekennzeichnet durch
- Mittel zur Erzeugung eines Fehlersignales, welches einer nicht linearen Funktion einer Differenz zwischen dem Rückkopplungssignal und dem Bezugssignal entspricht, derart, daß ein sanftes Anheben des Bodenbearbeitungsgeräts erfolgen kann, und
- Mittel zur Umwandlung des Fehlersignals in ein Steuersignal.

2. Steuersystem nach Anspruch 1, dadurch gekennzeichnet, daß das Fehlersignal bestimmt wird durch die Gleichung:
E = G20 - G20 (1 - ABS(FDBK - (R x a)) x b)²,
wobei ABS der absolute Funktionswert ist und a, b und G20 vorherbestimmbare Konstanten sind.

3. Steuersystem nach Anspruch 1 oder 2, gekennzeichnet durch Mittel, durch die das Fehlersignal einem Grenzsignal gleichgesetzt wird, sofern das Grenzsignal kleiner ist als das Fehlersignal.

4. Steuersystem nach Anspruch 3, gekennzeichnet durch von einer Bedienungsperson einstellbare Mittel (51) zur Erzeugung eines Lagegrenzwertsignals, das einer gewünschten oberen Lage der Anhängevorrichtung (26) entspricht, und durch Mittel zur Erzeugung des Grenzsignals als nicht lineare Funktion der Differenz aus dem Rückkopplungssignal und dem Lagegrenzwertsignal.

5. Steuersystem nach einem der Ansprüche 1 bis 4, gekennzeichnet durch
- einen Zugkraftsensor (38) zur Erzeugung von Zugkraftsignalen, die der erfaßten Zugkraft, welche aus der Wechselwirkung zwischen dem Bodenbearbeitungsgerät und dem Boden herrührt, entsprechen,
- ein erstes Mittel zur Erzeugung eines Steuersignales als eine nicht lineare Funktion des Lagesignales und
- ein zweites Mittel zur Erzeugung eines Steuersignales als eine lineare Funktion des Zugkraftsignales.

6. Steuersystem nach einem der Ansprüche 1 bis 5, gekennzeichnet durch:
- eine von einer Bedienungsperson verstellbare Führungsvorrichtung (54) zur Einstellung eines gewünschten Wertes eines Führungssignales,
- einen Zugkraftsensor (38) zur Erzeugung von Zugkraftsignalen, die den erfaßten Zugkräften entsprechen, welche aus der Wechselwirkung zwischen dem Bodenbearbeitungsgerät und dem Boden herrühren,
- eine von der Bedienungsperson einstellbare Vorrichtung (56) zur Erzeugung eines Mischsignales, welches dem gewünschten Grad der Einflußnahme des Lagesignals und des Zugkraftsignals auf das Steuersystem entspricht,
- Mittel zur Erzeugung eines Steuersignals als Funktion des Zugkraftsignals und des Mischwertes,
- Mittel zur Einstellung eines Referenzsignales, das dem Führungssignal entspricht, sofern die Vorrichtung zur Erzeugung eines Mischsignales sich in einem ersten Zustand befindet, und zur Einstellung eines Referenzsignales entsprechend dem Mehrfachen des Führungssignals, sofern die Vorrichtung zur Erzeugung eines Mischsignals sich in einem zweiten Zustand befindet, und
- Mittel zur Erzeugung von Steuersignalen als Funktion einer Differenz des erfaßten Lagesignals und des Referenzsignals.

7. Steuersystem nach Anspruch 6, dadurch gekennzeichnet, daß im Falle, daß der Mischwert einer maximalen Einflußnahme des Lagesignales entspricht, das Referenzsignal einem Wert gleichgesetzt wird, der der Lage der Führungsvorrichtung (54) entspricht, und daß im Falle, daß der Mischwert nicht einer maximalen Einflußnahme des Lagesignals entspricht, das Referenzsignal einem Wert gleichgesetzt wird, der der Lage der Führungsvorrichtung (54) multipliziert mit einem Multiplikationsfaktor entspricht, der vorzugsweise größer als 1 ist.

8. Steuersystem nach einem der Ansprüche 1 bis 7, gekennzeichnet durch:
- eine von einer Bedienungsperson verstellbare Führungsvorrichtung (54) zur Einstellung eines gewünschten Wertes eines Führungssignales,
- einen Zugkraftsensor (38) zur Erzeugung von Zugkraftsignalen, die den erfaßten Zugkräften entsprechen, welche aus der Wechselwirkung zwischen dem Bodenbearbeitungsgerät und dem Boden herrühren,
- eine durch eine Bedienungsperson unabhängig von der Führungseinrichtung einstellbare Mischsteuerung zur Einstellung des relativen Einflusses von Lage und Zugkraft im Steuersystem,
- erste Mittel zur Erzeugung der Steuersignale im wesentlichen als Funktion des Lagesignals und des Führungswertes,
- zweite Mittel zur Erzeugung des Steuersignals im wesentlichen als Funktion des Zugkraftsignales und des Führungswertes und
- Mittel, durch die die ersten Mittel unabhängig von der Mischsteuereinstellung in Betrieb gesetzt werden, wenn die Führungsvorrichtung (54) sich in einem ersten Lagebereich befindet, und durch die die zweiten Mittel in Betrieb gesetzt werden, wenn die Führungsvorrichtung (54) sich in einem zweiten Lagebereich befindet.

9. Steuersystem nach einem der Ansprüche 1 bis 8, gekennzeichnet durch:
- eine durch eine Bedienungsperson einstellbare Führungsvorrichtung (54),
- einen Zugkraftsensor (38) zur Erzeugung von Zugkraftsignalen, die den erfaßten Zugkräften entsprechen, welche aus der Wechselwirkung zwischen dem Bodenbearbeitungsgerät und dem Boden herrühren,
- eine von der Bedienungsperson einstellbare Vorrichtung (56) zur Erzeugung eines Mischsignales,
- Mittel zur Erzeugung eines Referenzlagewertes, dessen Größe es erlaubt, einen vorherbestimmbaren Einstellbereich der Führungsvorrichtung (54) darzustellen,
- Mittel zur Erzeugung eines Referenzzugkraftwertes, der der Einstellage der Führungsvorrichtung (54) entspricht,
- Mittel zur Erzeugung eines Zugkraftfehlerwertes, der die Differenz zwischen dem erfaßten und dem Referenzzugkraftwert repräsentiert,
- Mittel zur Erzeugung eines Lagefehlerwertes, der die Differenz zwischen dem erfaßten und dem Referenzlagewert repräsentiert,
- Mittel zur Erzeugung eines Mischwertes und eines Verstärkungswertes als Funktion der Einstellung der Vorrichtung zur Erzeugung eines Mischsignales, derart, daß der Mischwert einen relativen Einfluß des Zugkraftsensors und des Lagesensors repräsentiert und der Verstärkungswert ein lineares System, das sowohl von der Zugkraft als auch dem Lagefehler abhängt, repräsentiert, und daß die Mittel zur Erzeugung eines Mischwertes und eines Verstärkungswertes automatisch den Verstärkungswert erhöhen, wenn der Mischwert derart verstellt wird, daß der relative Einfluß des Zugkraftfehlers zunimmt, und
- Mittel zur Erzeugung eines Steuersignales als Funktion des Zugkraftfehlerwertes, des Lagefehlerwertes, des Empfindlichkeitswertes und des Verstärkungswertes.

10. Steuersystem nach Anspruch 9, dadurch gekennzeichnet, daß die Größe des Referenzlagewertes SPOS lediglich von der Einstellage der Führungsvorrichtung (54) abhängt, sofern sich die Anhängevorrichtung in einer unteren Lage ihres Lagebereiches befindet.

## Claims

1. A control system for a hitch device (26) of a vehicle (10), to which a ground-working implement can be attached, with actuating means (34) for raising and lowering the hitch device (26) over a range of positions, in dependence on control signals applied to an input, which includes:
- a sensor (60) for generating a feedback signal FDBK which corresponds to a detected position of the hitch device (26), and
- means for generating a reference signal R which corresponds to a reference position of the hitch device (26), characterized by
- means for generating an error signal which is a non-linear function of a difference between the feedback signal and the reference signal, in such a manner that a gentle raising of the ground-working implement can be effected, and
- means for converting the error signal into a control signal.

2. A control system according to claim 1, characterized in that the error signal is determined by the equation:
E = G20 - G20(1 - ABS(FDBK - (R x a)) x b)²,
wherein ABS is the absolute function value and a, b and G20 are predeterminable constants.

3. A control system according to claim 1 or 2, characterized by means for setting the error signal equal to a limit signal insofar as the limit signal is smaller than the error signal.

4. A control system according to claim 3, characterized by means (51) adjustable by an operator for generating a position limit value signal corresponding to a desired upper position of the hitch device (26), and by means for generating the limit signal as a non-linear function of the difference between the feedback signal and the position limit value signal.

5. A control system according to any of claims 1 to 4, characterized by
- a draft load sensor (38) for generating draft load signals which correspond to the detected draft load, which results from the interaction between the ground-working implement and the ground,
- a first means for generating a control signal as a non-linear function of the position signal and
- a second means for generating a control signal as a linear function of the draft load signal.

6. A control system according to any of claims 1 to 5, characterized by
- a guide device (54) adjustable by an operator for setting a desired value of a guide signal,
- a draft load sensor (38) for generating draft load signals which correspond to the detected draft loads, which result from the interaction between the ground-working implement and the ground,
- a device (56) adjustable by the operator for generating a mix signal, which corresponds to the desired degree of influence of the position signal and of the draft load signal on the control system,
- means for generating a control signal as a function of the draft load signal and of the mix value,
means for setting a reference signal which corresponds to the guide signal insofar as the device for generating a mix signal is in a first state, and for setting a reference signal corresponding to the multiple of the guide signal insofar as the device for generating a mix signal is in a second state, and
- means for generating control signals as a function of a difference in the detected position signal and the reference signal.

7. A control system according to claim 6, characterized in that, when the mix value corresponds to a maximum influence of the position signal, the reference signal is set to a value which corresponds to the position of the guide device (54) and in that when the mix value does not correspond to a maximum influence of the position signal, the reference signal is set to a value with corresponds to the position of the guide device (54) multiplied by a multiplication factor which is preferably greater than 1.

8. A control system according to any of claims 1 to 7, characterized by
- a guide device (54) adjustable by an operator for setting a desired value of a guide signal,
- a draft load sensor (38) for generating draft load signals which correspond to the detected draft loads, which result from the interaction between the ground-working implement and the ground,
- a mix control adjustable by the operator independently of the guide device, for setting the relative influence of position and draft load on the control system,
- first means for generating the control signal essentially as a function of the position signal and the guide value,
- second means for generating the control signal essentially as a function of the draft load signal and the guide value and
- means through which the first means are rendered operative independently of the mix control setting when the guide device (54) is in a first position range and through which the second means are rendered operative when the guide device (54) is in a second position range.

9. A control system according to any of claims 1 to 8, characterized by
- a guide device (54) adjustable by an operator,
- a draft load sensor (38) for generating draft load signals which correspond to the detected draft loads, which result from the interaction between the ground-working implement and the ground,
- a device (56) adjustable by the operator for generating a mix signal,
- means for generating a reference position value, whose magnitude allows it to represent a predeterminable setting range of the guide device (54),
- means for generating a reference draft load value which corresponds to the position of adjustment of the guide device (52),
- means for generating a draft load error value which represents the difference between the detected and reference draft load values,
- means for generating a position error value which represents the difference between the detected and reference position values,
- means for generating a mix value and a gain factor as a function of the setting of the device for generating a mix signal in such a way that the mix value represents a relative influence of the draft load sensor and the position sensor and the gain factor represents a linear system, which depends both on the draft load and on the position error, and in that the means for generating a mix value and a gain factor automatically increase the gain factor when the mix value is so adjusted that the relative influence of the draft load error increases, and
- means for generating a control signal as a function of the draft load error value, the position error value, the mix value and the gain factor.

10. A control system according to claim 9, characterized in that the magnitude of the reference position value SPOS depends merely on the set position of the guide device (54) insofar as the hitch device is in a lower position of its position range.

## Revendications

1. Système de commande pour un dispositif d'attelage (26) d'un véhicule (10), auquel peut être fixé un outil de travail du sol, comportant des moyens d'actionnement (34) pour soulever et abaisser le dispositif d'attelage (26) sur une gamme de positions, en fonction de signaux de commande appliqués à une entrée, et qui contient :
- un capteur (60) pour produire un signal de réaction FDBK, qui correspond à une position détectée du dispositif d'attelage (26), et
- des moyens pour produire un signal de référence R, qui correspond à une position de référence du dispositif d'attelage (26),
caractérisé par
- des moyens pour produire un signal d'erreur, qui correspond à une fonction non linéaire d'une différence entre le signal de réaction et le signal de référence, de telle sorte que l'on peut obtenir un soulèvement en douceur de l'appareil de travail du sol, et
- des moyens pour convertir le signal d'erreur en un signal de commande.

2. Système de commande selon la revendication 1, caractérisé en ce que le signal d'erreur est déterminé par la relation
E = G20 - G20 (1 - ABS(FDBK - (R x a)) x b)²,
ABS désignant la valeur absolue de la fonction et a, b et G20 des constantes pouvant être déterminées par avance.

3. Système de commande selon la revendication 1 ou 2, caractérisé par des moyens à l'aide desquels le signal d'erreur est réglé égal à un signal limite, dans la mesure où le signal limite est inférieur au signal d'erreur.

4. Système de commande selon la revendication 3, caractérisé par des moyens (51) réglables par un opérateur, pour produire un signal de valeur limite de position, qui correspond à une position supérieure désirée du dispositif d'attelage (26), et par des moyens pour produire le signal limite sous la forme d'une fonction non linéaire de la différence entre le signal de réaction et le signal de valeur limite de position.

5. Système de commande selon l'une des revendications 1 à 4, caractérisé par
- un capteur (38) de forces de traction pour produire des signaux de la force de traction, qui correspondent à la force de traction détectée, qui résultent de l'interaction entre l'outil de travail du sol et le sol,
- un premier moyen pour produire un signal de commande sous la forme d'une fonction non linéaire du signal de position, et
- un second moyen pour produire un signal de commande sous la forme d'une fonction linéaire du signal de la force de traction.

6. Système de commande selon l'une des revendications 1 à 5, caractérisé par
- un dispositif de guidage (54) réglable par un opérateur et servant à régler une valeur désirée d'un signal de guidage,
- un capteur (38) de la force de traction servant à produire des signaux de forces de traction, qui correspondent aux forces de traction détectées et qui résultent de l'interaction entre l'appareil de travail du sol et le sol,
- un dispositif (56) réglable par l'opérateur et servant à produire un signal mixte, qui correspond au degré désiré d'influence du signal de position et du signal de la force de traction sur le système de commande,
- des moyens pour produire un signal de commande en fonction du signal de la force de traction et de la valeur de mélange,
- des moyens pour régler un signal de référence, qui correspond au signal de guidage, dans la mesure où le dispositif servant à produire un signal combiné est situé dans un premier état, et pour régler un signal de référence en fonction du multiple du signal de guidage, dans la mesure où le dispositif servant à produire un signal combiné est situé dans un second état, et
- des moyens pour produire des signaux de commande en fonction d'une différence entre le signal de position détecté et le signal de référence.

7. Système de commande selon la revendication 6, caractérisé en ce que dans le cas où la valeur combinée correspond à une influence maximale du signal de position, le signal de référence est rendu égal à une valeur qui correspond à la position du dispositif de guidage (54), et que dans le cas où la valeur combinée ne correspond pas à une influence maximale du signal de position, le signal de référence est rendu égal à une valeur, qui correspond à la position du dispositif de guidage (54), multipliée par un facteur multiplicatif, qui est de préférence supérieur à 1.

8. Système de commande selon l'une des revendications 1 7, caractérisé par :
- un dispositif de guidage (54), qui est réglable par un opérateur et sert à régler une valeur désirée d'un signal de guidage,
- un capteur de forces de traction (38) servant à produire des signaux de forces de traction, qui correspondent aux forces de traction détectées et qui résultent de l'interaction entre l'appareil de travail du sol et le sol,
- une unité de commande combinée réglable par un opérateur en fonction du dispositif de guidage et servant à régler l'influence relative de la position et de la force de traction dans le système de commande,
- des premiers moyens pour produire les signaux de commande essentiellement en fonction du signal de position et de la valeur de guidage,
- des seconds moyens pour produire le signal de commande essentiellement en fonction du signal de la force de traction et de la valeur de guidage, et
- des moyens, à l'aide desquels les premiers moyens sont mis en fonctionnement indépendamment du réglage de commande combiné, lorsque le dispositif de guidage (54) est situé dans la première gamme de positions, et au moyen desquels les seconds moyens sont activés, lorsque le dispositif de guidage (54) est situé dans une seconde gamme de positions.

9. Système de commande selon l'une des revendications 1 à 8, caractérisé par :
- un dispositif de guidage (54) réglable par un opérateur,
- un capteur (38) de forces de traction servant a produire des signaux de forces de traction, qui correspondent aux forces de traction détectées qui sont dues à l'interaction entre l'appareil de travail du sol et le sol,
- un dispositif (56) réglable par l'opérateur et servant à produire un signal combiné,
- des moyens pour produire une valeur de position de référence, dont la grandeur permet de représenter une zone de réglage pouvant être déterminée par avance du dispositif de guidage (54),
- des moyens pour produire une valeur de la force de réaction de référence, qui correspond à la position de réglage du dispositif de réglage (54),
- des moyens pour produire une valeur d'erreur de la force de traction, qui représente la différence entre la valeur détectée et la valeur de la force de traction de référence,
- des moyens pour produire une valeur d'erreur de position, qui représente la différence entre la valeur de position détectée et la valeur de position de référence,
- des moyens pour produire une valeur combinée et une valeur d'amplification en fonction du réglage du dispositif pour produire un signal combiné de telle sorte que la valeur combinée représente une influence relative du capteur de forces de traction et du capteur de position et que la valeur d'amplification représente un système linéaire, qui dépend aussi bien de la force de traction que de l'erreur de position, et que les moyens pour produire une valeur combinée et une valeur d'amplification augmentent automatiquement la valeur d'amplification lorsque la valeur combinée est réglée de telle sorte que l'influence relative de l'erreur de la force de traction augmente, et
- des moyens pour produire un signal de commande en fonction de la valeur d'erreur de la force de traction, de la valeur de l'erreur de position, de la valeur de sensibilité et de la valeur d'amplification.

10. Système de commande selon la revendication 9, caractérisé en ce que la grandeur de la valeur de position de référence SPOS dépend uniquement de la position de réglage du dispositif de guidage (54), dans la mesure où le dispositif d'attelage est situé dans une position inférieure de sa gamme de positions.
